# EUROPEAN PATENT APPLICATION

(11) **EP 2 269 843 A1**
(43) Date of publication of application: **05.01.2011**
(21) Application number: 09008567.1
(22) Date of filing: 30.06.2009
(51) Int. Cl.: B60C 27/04

(54) **Anti-skid system**

(71) Applicant: Mazzamurro, Giovanni, 20090 Buccinasco (IT)
(72) Inventor: Mazzamurro, Giovanni, 20090 Buccinasco (IT)
(74) Representative: Grünecker, Kinkeldey, Stockmair & Schwanhäusser Anwaltssozietät

(57) **Abstract**

An anti-skid device according to the present invention is extremely easy to activate/deactivate. It can be installed on the wheels of the vehicles and kept there for long periods of time without interfering on the driving performances of the vehicle. Whenever the circumstances arise, it is simply necessary to activate the device by means of the actuating means (4;14) to obtain a safe and complete traction control of the vehicle even on extremely slippery roads. The anti-skid device further guarantees high driving and travelling comfort and it does not interfere at all with the tire wear process of the vehicle.

## Description

### FIELD OF THE PRESENT INVENTION

The present invention relates to the field of anti-skid devices. In particular, the present invention relates to anti-skid devices for wheeled vehicles. More in particular, the present invention relates to actuated anti-skid devices. Still more in particular, the present invention relates to pneumatically and/or mechanically actuated anti-skid devices.

### STATE OF THE ART

Anti-skid devices are employed to improve the traction and the road holding capabilities of vehicles in critical situations such as in the presence of road surfaces covered with snow, ice, mixtures of water and ice, mud or the like. In these situations it is extremely dangerous, if not impossible, to drive a vehicle without anti-skid devices. For these reasons, there are several areas, especially in the mountains regions typically prone to sudden and copious snowfalls or to frost, whose traffic circulation is limited to vehicles carrying on board anti-skid devices ready to be used. Anti-skid devices are then usually carried in the trunks of the vehicles and they are mounted on the driving wheels of the vehicles whenever it is necessary. A typical example of anti-skid device widely employed all over the world is represented by the snow chains. This and other kinds of known anti-skid devices are characterized by a series of problems and drawbacks. One of the major problems connected with the traditional anti-skid devices known in the art is related to the difficulty of mounting the device on the wheels of the vehicles. The mounting operations necessary to safely and properly install the traditional anti-skid devices are usually complex and requires a certain degree of familiarity and experience. Moreover, these mounting operations are made more difficult by the fact that they have to be performed under adverse meteorological conditions, such as in the presence of very low external temperatures, during snow storms or in the dark if driving at night time. Accordingly, mounting the traditional anti-skid devices is extremely time consuming and may even require more than one person to be carried out. Similarly, it is also difficult to perform the removing operations of the known anti-skid devices from the wheels of the vehicles. Moreover, right after use, the anti-skid devices are dirty and may be clogged by large pieces of mud, snow or ice. Accordingly, removing the anti-skid devices right after use may be a particularly annoying and unpleasant task. A further problem related to the known anti-skid devices relates to the fact that they ruin the road surface when it is not covered with snow, ice or mud. Accordingly, it might be necessary to mount and remove the known anti-skid devices several times while traveling along roads presenting varying surface conditions. In particular, it is compulsory to remove the anti-skid devices whenever the road surface is clean in order to avoid to damage it. For these reasons and considering the above-mentioned problems related to the mounting and removing operations of the known anti-skid devices, it is extremely difficult and time consuming to travel along roads presenting varying surface conditions. A further problem related to the known anti-skid devices concerns the driving comfort of the vehicles once the anti-skid devices are mounted. Typically, once the known anti-skid devices are mounted, the vehicle tends to jerk and the driving and travelling comfort are strongly reduced. For these reasons, it is necessary to drive extremely slowly. Still a further problem concerning the known anti-skid devices relates to the wear of the tires due to the use of said devices. The frequent use of snow chains, in fact, damages the surfaces of the tires and contributes, therefore, to accelerate the tires wear. A further problem concerning known anti-skid devices relates to the replacement of defect or worn components of said devices. Typically, this is extremely costly and, in several cases, it is necessary to replace the entire device.

### OBJECT OF THE PRESENT INVENTION

In view of the mentioned problems concerning the known anti-skid devices, it is an object of the present invention to provide an anti-skid device allowing to overcome these problems. In particular, it is an object of the present invention to provide an anti-skid device which is extremely easy to activate and deactivate. It is a further object of the present invention to provide an anti-skid device that does not ruin the road surface when said surface is not covered with ice, snow or mud. It is a further object of the present invention to provide an anti-skid device which guarantees high standards of driving and travelling comfort. It is still an object of the present invention, to provide an anti-skid device that does not contribute to the wear of the tires. It is a further object of the present invention to provide an anti-skid device whose components are easily replaceable in case they are damaged or worn.

### BRIEF DESCRIPTION OF THE INVENTION

The present invention is based on the innovative concept of providing an anti-skid device comprising anti-skid means provided with gripping means adapted to exert friction on a slippery road surface, wherein said anti-skid means are displaceable from an activated position wherein the gripping means are substantially level with the tire tread of the wheel so as to exert friction on the road surface to a deactivated position wherein the gripping means are below the level of the tire tread of the wheel and vice versa, said anti-skid device being further provided with actuating means for displacing said anti-skid means from said deactivated position to said activated position and vice versa.

According to a preferred embodiment of the present invention, the anti-skid device comprises anti-skid means provided with shock absorbing means allowing the anti-skid means to be elastically displaced.

According to a particularly advantageous embodiment of the present invention, the anti-skid device comprises gripping means provided with shock absorbing means allowing the gripping means to be elastically displaced.

According to a further embodiment of the present invention, the anti-skid device comprises gripping means comprising a surrounding spring disposed around the entire external perimeter of the anti-skid device so that when the anti-skid means are in the activated position the perimeter of the surrounding spring substantially corresponds to the perimeter of the wheel so that the coils of the surrounding spring exert fraction on the slippery road surface.

According to a particularly advantageous embodiment of the present invention, the actuating means for displacing the anti skid means from the deactivated position to the activated position and vice versa comprise pneumatically actuated actuating means.

According to a further embodiment of the present invention, the pneumatically actuated actuating means comprise a bladder.

According to still a further embodiment of the present invention, the pneumatically actuated actuating means comprise an actuator engaged through an actuating arm with a pair of pivotable actuating levers.

According to a further embodiment of the present invention, the actuating means for displacing the anti skid means from the deactivated position to the activated position and vice versa comprise mechanically actuated actuating means.

According to a further embodiment of the present invention particularly advantageous, the mechanically actuated actuating means comprise an eccentric so that the rotation of said eccentric allows the anti-skid means to be displaced from the deactivated position to the activated position and vice versa.

### BRIEF DESCRIPTION OF THE DRAWINGS

Figure 1A displays a 3D view of the front side of the wheel of a vehicle provided with the anti-skid device according to a first embodiment of the present invention;
Figure 1B displays a 3D view of the rear side of the wheel shown in figure 1A;
Figure 1C shows a 3D enlargement of the device according to a first embodiment of the present invention deactivated;
Figure 1D shows a sectional view of the components shown in figure 1C;
Figure 1E shows a 3D enlargement of the device according to a first embodiment of the present invention activated;
Figure 1F shows a sectional view of the components shown in figure 1E;
Figure 1G displays a wheel provided with the anti-skid device according to the first embodiment of the present invention deactivated;
Figure 1H displays the front view of the wheel shown in figure 1G;
Figure 1I displays a wheel provided with the anti-skid device according to the first embodiment of the present invention activated;
Figure 1J displays the front view of the wheel shown in figure 1I;
Figure 1K displays the entry ports of the pneumatic circuit of the anti-skid device configured for deactivating the device;
Figure 1L displays the entry ports of the pneumatic circuit of the anti-skid device configured for keeping the device in the deactivated state;
Figure 1M displays the entry ports of the pneumatic circuit of the anti-skid device configured for activating the device;
Figure 1N displays the entry ports of the pneumatic circuit of the anti-skid device configured for keeping the device in the activated state;
Figure 2A displays a 3D view of the front side of the wheel of a vehicle provided with the anti-skid device according to a second embodiment of the present invention;
Figure 2B displays a 3D view of the rear side of the wheel shown in figure 2A;
Figure 2C shows a 3D enlargement of the device according to a second embodiment of the present invention deactivated;
Figure 2D shows a sectional view of the components shown in figure 2C;
Figure 2E shows a 3D enlargement of the device according to a second embodiment of the present invention activated;
Figure 2F shows a sectional view of the components shown in figure 2E;
Figure 3A displays a 3D view of the front side of the wheel of a vehicle provided with the anti-skid device according to a third embodiment of the present invention;
Figure 3B displays a 3D view of the rear side of the wheel shown in figure 3A;
Figure 3C shows a 3D enlargement of the device according to the third embodiment of the present invention deactivated;
Figure 3D shows a sectional view of the components shown in figure 3C;
Figure 3E shows a 3D enlargement of the device according to a third embodiment of the present invention activated;
Figure 3F shows a sectional view of the components shown in figure 3E;
Figure 4A displays a 3D view of the front side of the wheel of a vehicle provided with the anti-skid device according to a fourth embodiment of the present invention;
Figure 4B displays a 3D view of the rear side of the wheel shown in figure 4A;
Figure 4C shows a 3D enlargement of the device according to the fourth embodiment of the present invention deactivated;
Figure 4D shows a sectional view of the components shown in figure 4C;
Figure 4E shows a 3D enlargement of the device according to the fourth embodiment of the present invention activated;
Figure 4F shows a sectional view of the components shown in figure 4E;
Figure 4G displays a wheel provided with the anti-skid device according to the fourth embodiment of the present invention activated;
Figure 4H displays the front view of the wheel shown in figure 4G;
Figure 5A displays the anti-skid device according to a fifth embodiment of the present invention mounted on a wheel of a vehicle and deactivated;
Figure 5B displays a front view of the wheel shown in figure 5A;
Figure 5C displays one of the anti-skid units of the device according to the fifth embodiment of the present invention deactivated;
Figure 5D displays the actuating mechanism of the unit shown in figure 5C;
Figure 5E displays one of the anti-skid units of the device according to the fifth embodiment of the present invention activated;
Figure 5F displays the actuating mechanism of the unit shown in figure 5E;
Figure 5G displays the anti-skid device according to the fifth embodiment of the present invention mounted on a wheel of a vehicle and activated;
Figure 5H displays a front view of the wheel shown in figure 5G.

### DETAILED DESCRIPTION

In the following, the present invention is described with reference to particular embodiments as shown in the enclosed drawings. Nevertheless, the present invention is not limited to the particular embodiments described in the following detailed description and shown in the figures, but, instead, the embodiments described simply exemplify several aspects of the present invention, the scope of which is defined by the appended claims.

Further modifications and variations of the present invention will be clear for the person skilled in the art. Therefore, the present description has to be considered as including all the modifications and/or variations of the present invention, the scope of which is defined by the appended claims.

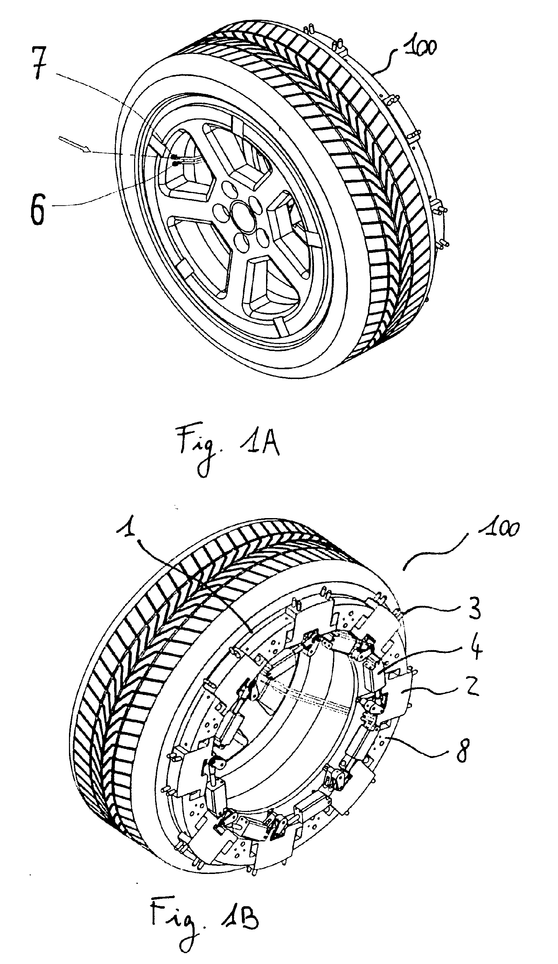

Figures 1A to 1N schematically show an anti-skid device according to a first embodiment of the present invention. For simplicity, identical or corresponding components are indicated in the figures with the same reference numbers.

As can be seen in figures 1A and 1B, the device 100 is provided on the inner side of the wheel, i.e. on the side of the wheel facing the vehicle. In alternative embodiments of the present invention, the device 100 could be provided on the outer side of the wheel. In still alternative embodiments of the present invention, the device 100 could be provided between two paired twin wheels, for instance in the case of vehicles such as trucks. The anti-skid device has a substantially circular shape and it comprises a circular support 1 provided with a plurality of circular segments or blocks 2 and 8. In particular, movable blocks 2 are alternate along the perimeter of the support 1 with fixed blocks 8. The support 1 as well as the blocks 2 and 8 may be made of any suitable material. For instance, the support 1 and the blocks 2 and 8 may be made of light alloys. The support 1 is adapted to be fixed to the wheel of the vehicle. The support 1 may be adapted to be fixed, for instance, to the rim of the wheel. Alternatively, the support 1 may be adapted to be fixed to the hub of the wheel. The support 1 may be for instance a flange having, therefore, a flattened-ring form. The fixed blocks 8 are arranged on the support 1 and attached thereon in such a way so as not to be movable with respect to the support 1. The fixed blocks 8 may be fastened to the support 1 by means of fastening means such as screws. The movable blocks 2 are adapted to be movable, with respect to the support 1, along a diametral direction of said support 1. The movement of the blocks 2 is pneumatically actuated as described in detail below. Each of the movable blocks 2 is provided with pneumatic actuating means.

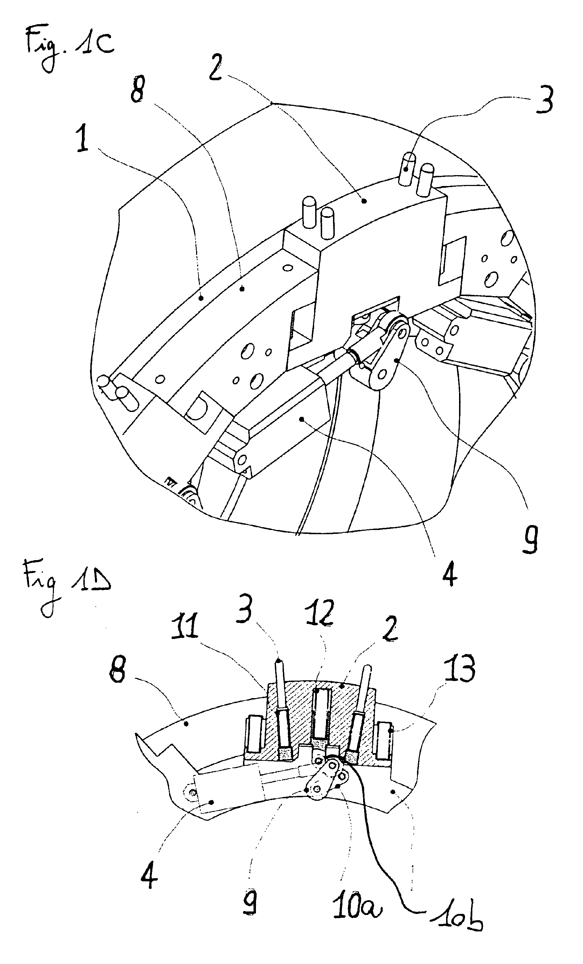

Figures 1C and 1D display enlargements of the blocks 2 and 8 and of the pneumatic actuating means adapted to control the movement of the movable blocks 2.

Figure 1C displays a fixed block 8 attached to the support 1. The block 8 is substantially T-shaped and it is placed between two movable blocks. The movable block 2, in turn, is placed between two fixed blocks. In particular, adjacent fixed blocks 8 form a guide wherein the movable blocks are placed and along which they can move. The movable block 2 is also substantially T-shaped but it is arranged upside down with respect to the fixed block 8. In figures 1C and 1D the anti-skid device is deactivated. In particular, the movable blocks are in their rest position, i.e. retracted. As can be seen from figure 1D, the system is provided with springs 13 placed in the spaces between adjacent blocks 2 and 8. In particular, the springs 13 are placed between the lower region of the movable T-shaped block 2 and the upper region of the fixed T-shaped block 8. The elastic force exerted by the spring 13 pushes the movable block 2 toward its rest position. In particular, the elastic force exerted by the spring 13 contributes to retract the movable block 2. The movable block is further provided with a cavity equipped with a spring 12. The elastic force exerted by the spring 12 is opposed to the force exerted by the spring 13. In particular, the spring 12 pushes the movable block 2 toward the activated position.

The presence of the springs 12 and 13 is particularly relevant for guaranteeing the mobility of the blocks when they are pushed against the road surface when the anti-skid device is activated. In particular, the springs 12 and 13 act as shock absorbers improving the driving comfort of the vehicle when the anti-skid system is activated. The springs 12 and 13 can be replaced by any other suitable elastic means.

As can be seen from figures 1C and 1D, the movable block 2 is provided with protruding pins 3 adapted to exert friction on the road surface. Although in the embodiment shown in these figures the block 2 is provided with four cylindrical pins 3, the number and the shape of the pins may vary. The pins could be for instance pointed or with a rounded tip. Moreover, the pins could have the shape of a parallelepiped, a cone, a pyramid or a frustum instead of a cylinder. The pins are placed in cavities realized in the movable block 2 and they are movable in substantially the same direction as the movable block 2. In particular, the cavities housing the pins are provided with springs 11 and the pins 3 are mounted on said springs 11. The elastic force exerted by the springs 11 pushes the pins 3 so as to protrude outside from the movable block 2. The presence of the springs 11 is particularly relevant for guaranteeing the mobility of the pins when they are pushed against the road surface when the antiskid device is activated. On one hand, the springs 11, pushing the pins so as to protrude, guarantee the road holding and the anti-skid performances of the device according to the present invention. On the other hand, the springs 11 act as shock absorbers allowing the pins to be pressed inside the movable block 2 when they are pushed against the road surface.

Figures 1C and 1D further display the pneumatic actuating means adapted to control the movement of the movable blocks 2. Said pneumatic actuating means comprise a pneumatic actuator 4 with an actuating arm and two pivotable actuating levers 10a and 10b. The pivotable actuating levers 10a and 10b are jointed to each other by bolts. In particular, the first actuating lever 10a is pivotally connected at its first end with the support 1. The second end of the first actuating lever 10a is pivotally connected with the first end of the second actuating lever 10b. The second end of the second actuating lever is pivotally connected with the movable block 2. The actuating arm of the pneumatic actuator 4 and the pivotable actuating levers 10a and 10b are coupled to each other via a pivotable control lever 9 fastened to said actuating arm by bolts. In figures 1C and 1D the anti-skid device is deactivated. In particular, the actuating arm of the pneumatic actuator 4 is extended so that the pivotable control lever 9 is bent rightward in figure. When the pivotable control lever 9 is in this position, it forces the pivotable actuating levers 10a and 10b to be bent so as to form a V-shaped configuration. In this configuration, the first end of the first actuating lever 10a is at the minimum distance to the second end of the second actuating lever 10b and the movable block 2 is retracted. In this configuration the anti-skid device is deactivated.

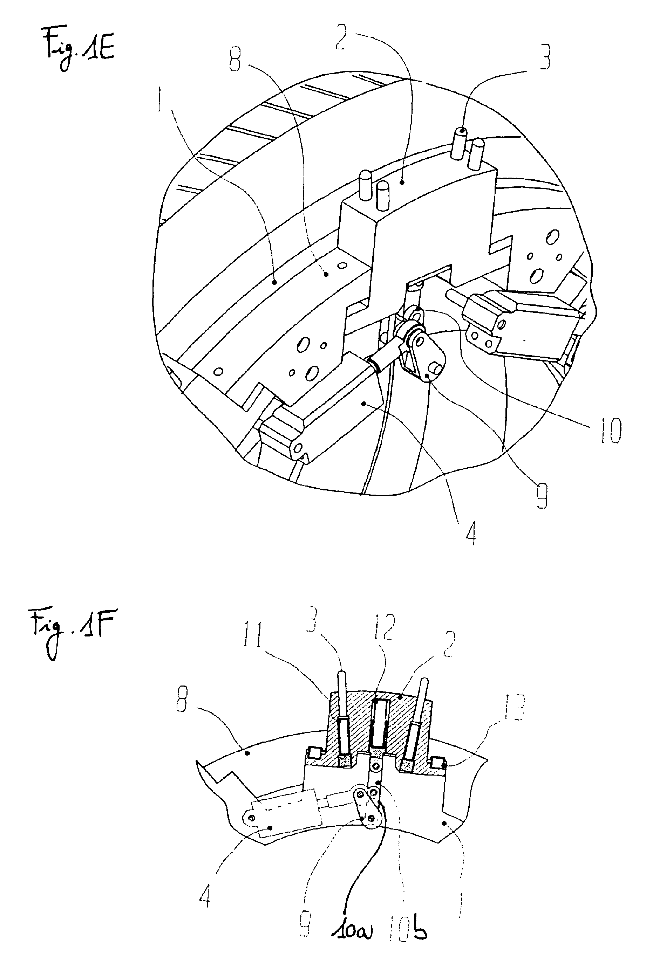

Figures 1E and 1F show in detail the situation with the activated anti-skid device. The actuating arm of the pneumatic actuator 4 is retracted so that the pivotable control lever 9 is bent leftward in figure. When the pivotable control lever 9 is in this position, the actuating levers 10a and 10b are aligned and the movable block 2 is extracted. In this configuration the springs 13 placed in the spaces between adjacent blocks 2 and 8 are pressed.

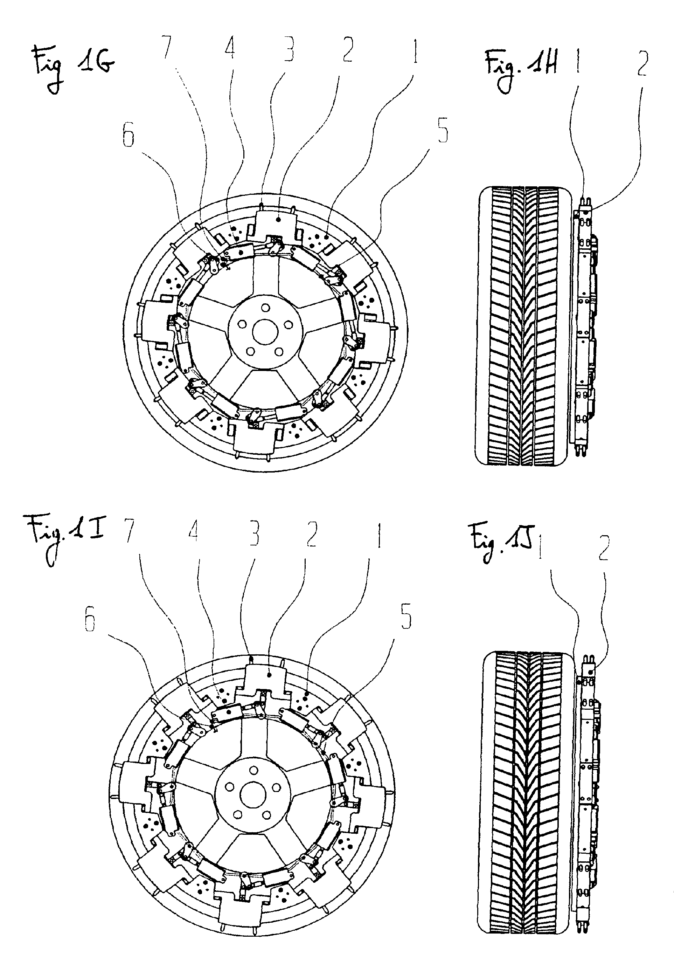

Figures 1G and 1H display the device according to the first embodiment of the present invention applied to a wheel of a vehicle and deactivated. In figure 1G it is possible to see that the actuating arms of each of the pneumatic actuators 4 is extracted so as to retract the corresponding movable block 2 as explained above with reference to figures 1C and 1D. In particular the movable blocks 2 are retracted so that the tips of the protruding pins 3 are below the level of the tire tread. In this configuration, there is no contact between the protruding pins 3 and the road surface.

Figures 1I and 1J display the device according to the first embodiment of the present invention applied to a wheel of a vehicle and activated. In figure 1I it is possible to see that the actuating arms of each of the pneumatic actuators 4 is retracted so as to push outward the corresponding movable block 2 as explained above with reference to figures 1E and 1F. In particular, as can be seen from both figures, the movable blocks 2 are pushed outward along diametral directions of the wheel so that the protruding pins 3 are substantially level with the tire tread or, in other words, the protruding pins 3 are substantially at the same level of the tire tread. Accordingly, when the wheel rotates, the protruding pins 3 come into contact with the road surface so as to exert the anti-skid function. Moreover, in this configuration, the springs 11 holding the protruding pins 3 allow the pins 3 in contact with the road surface to be pushed inside the blocks 2 as a consequence of the weight of the vehicle. In this way, a shock absorber function is achieved and the anti-skid device according to the first embodiment of the present invention guarantees the driving comfort of the vehicle. Similarly, the springs 13 and 12 allow the movable blocks 2 to be pushed inward, especially in the case of irregular road surfaces with asperities. If the wheel encounters an asperity, in particular in correspondence of a movable block 2 of the anti-skid device, the movable block can be easily pushed inward by pressing against the spring 12. This has the double advantageous effect of improving the driving comfort of the vehicle on irregular road surfaces and of preventing the anti-skid device and, in particular, the movable blocks and the corresponding pneumatic actuating means from being damaged by the presence of asperities on the road surface.

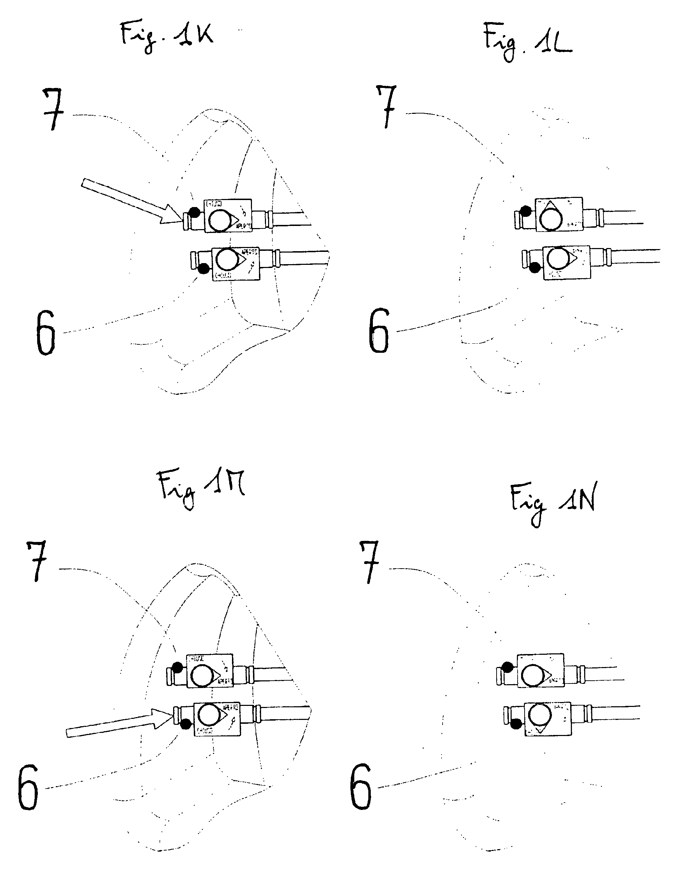

In the following, the pneumatic circuit of the anti-skid device according to the first embodiment of the present invention and its operation are described. The anti-skid device comprises an activation port 6 and a deactivation port 7. The ports 6 and 7 are provided with valves and they are connected with air pipes adapted to supply air to each of the pneumatic actuating means. In particular, the plurality of pneumatic actuating means are connected to each other by a pneumatic circuit 5 visible for instance in figures 1G and 1I. Both the activation and the deactivation of the anti-skid device are controlled pneumatically by supplying high pressure air to the corresponding entry port. Figures 1K and 1L display the deactivation procedure of the anti-skid device. High pressure air is supplied to the deactivation port 7. For instance, high pressure air may be supplied by a gas compressor connected with the deactivation port 7. The actuation arms of the pneumatic actuators 4 are extracted and the corresponding movable blocks 2 are pulled inward so as to deactivate the device as described above. The valve connected with the deactivation port 7 is closed (figure 1L) and the system is kept in the deactivated state. In order to activate the system, the valve connected with the deactivation port 7 is opened and high pressure air is supplied to the activation port 6 whose valve is also open (figure 1M). Also in this case, high air pressure may ne supplied by a gas compressor connected with the activation port 6. The actuation arms of the pneumatic actuators 4 are retracted and the corresponding movable blocks 2 are pushed outward so as to activate the device as described above. The valve connected with the activation port 6 is closed (figure 1N) and the system is kept in the activated state.

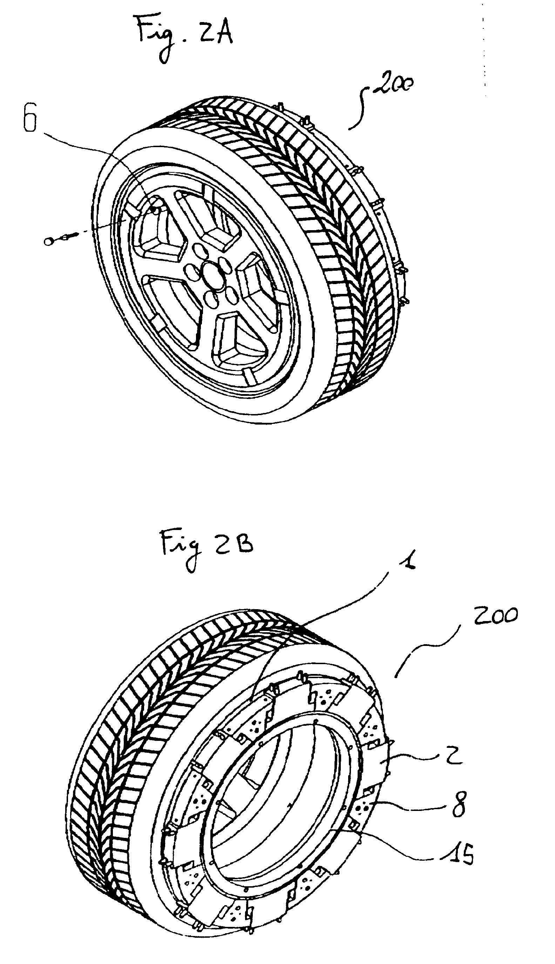

Figures 2A to 2F schematically show an anti-skid device according to a second embodiment of the present invention. For simplicity, identical or corresponding components are indicated in the figures with the same reference numbers.

As can be seen in figures 2A and 2B, the anti-skid device according to the second embodiment is similar to the anti-skid device according to the first embodiment described above. In particular, the device 200 is provided on the inner side of the wheel, i.e. on the side of the wheel facing the vehicle. In alternative embodiments of the present invention, the device 200 could be provided on the outer side of the wheel. In still alternative embodiments of the present invention, the device 200 could be provided between two paired twin wheels, for instance in the case of vehicles such as trucks. The anti-skid device has a substantially circular shape and it comprises a circular support 1 provided with a series of circular segments or blocks 2 and 8. In particular, movable blocks 2 are alternate along the perimeter of the support 1 with fixed blocks 8. The support 1 as well as the blocks 2 and 8 may be made of any suitable material. For instance, the support 1 and the blocks 2 and 8 may be made of light alloys. The support 1 is adapted to be fixed to the wheel of the vehicle. The support 1 may be adapted to be fixed, for instance, to the rim of the wheel. Alternatively, the support 1 may be adapted to be fixed to the hub of the wheel. The support 1 may be for instance a flange having, therefore, a flattened-ring form. The fixed blocks 8 are arranged on the support 1 and attached thereon in such a way so as not to be movable with respect to the support 1. The fixed blocks 8 may be fastened to the support 1 by means of fastening means such as screws. The movable blocks 2 are adapted to be movable, with respect to the support 1, along a diametral direction of said support 1. The movement of the blocks 2 is pneumatically actuated as described in detail below. The device is further provided with a bladder seat 15 adapted to house a bladder 14.

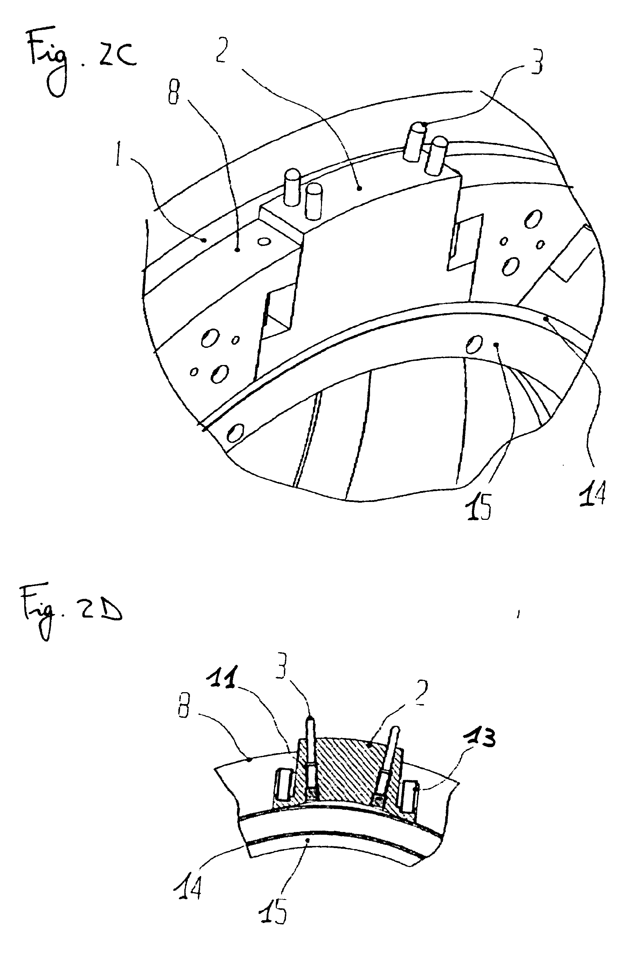

As can be seen from the enlargements shown in figures 2C and 2D, the fixed blocks 8 and the movable blocks 2 are similar to the blocks of the first embodiment. In particular, the fixed blocks 8 are substantially T-shaped and each fixed block is placed between two movable blocks. Each of the movable blocks 2, in turn, is placed between two fixed blocks 8. The movable blocks 2 are also substantially T-shaped but they are arranged upside down with respect to the fixed blocks 8. Similarly to the first embodiment, the system according to the second embodiment is also provided with springs 13 placed in the spaces between adjacent blocks 2 and 8. Moreover, the movable blocks 2 are provided with protruding pins mounted on springs 11 housed into cavities realized in the blocks. As already mentioned with respect to the first embodiment of the present invention, the number and the shape of the pins may vary.

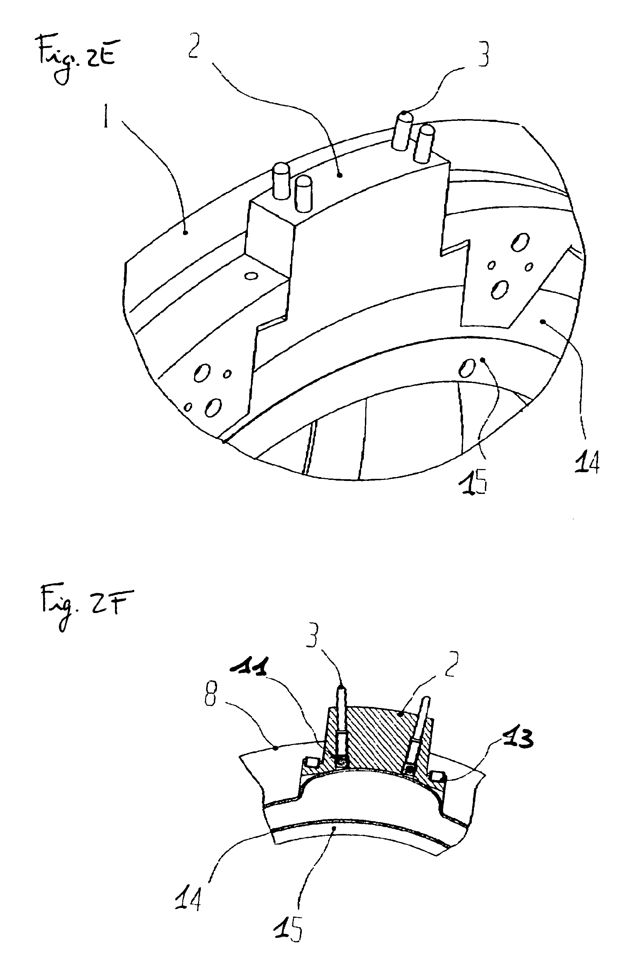

The system is pneumatically actuated by pneumatic actuating means comprising a bladder 14 and a bladder seat 15. As can be seen in figure 2D, the bladder seat 15 comprises the lower surfaces of the fixed and of the movable blocks. The bladder 14 is housed within the bladder seat 15 and when it is deflated, i.e. when no air or only low pressure air is present within the bladder, the movable blocks 2 are retracted under the action of the springs 13 and the system is deactivated (figure 2D). On the contrary, when the bladder 14 is inflated, the system is activated (figures 2E and 2F). In particular, this is due to the fact that bladder seat 15 is only expandable in correspondence of the movable blocks 2. When air is supplied to the bladder 14, the bladder inflates within the bladder seat 15 and, being elastic, it can further inflate in correspondence of the movable blocks 2 forming bulges that push the movable blocks 2 outwardly in the activated position and compress the springs 13 (figure 2F). Moreover, the bladder 14 in the second embodiment of the present invention, act not only as actuating means as described above, but also as shock absorber means. In fact, since the bladder 14 is elastic, the bulges formed in the bladder can be pressed so that the movable blocks 2 can be retracted for instance when the vehicle travels on an irregular road surface presenting asperities.

The anti-skid properties and the driving comfort properties of the device according to the second embodiment of the present invention are therefore similar to the properties of the first embodiment. In particular, once the system is activated, the protruding pins 3 are substantially level with the tire tread or, in other words, the protruding pins 3 are substantially at the same level of the tire tread, so as to exert the anti-skid function. Moreover, the springs 11 and 13 and the presence of the bladder 14 as actuating means, guarantees the shock absorber functionality of the system.

Since the bladder 14 exerts both the actuating and the shock absorber functionalities, the structure of the device according to second embodiment of the present invention is more simple than the structure of the device according to the first embodiment. In particular, as can be seen comparing for instance figure 2F with figure 1F, it is not necessary to provide the movable block 2 with a spring 12 for allowing the block to be pressed inwardly for instance in the case of the presence of asperities such as stones on the road surface. The bulge in the elastic bladder 14 of figure 2F can be pressed so as to act as a perfect shock absorber.

The pneumatic circuit of the anti-skid device according to the second embodiment of the present invention is particularly simple and easy to operate. In particular, as can be seen in figure 2B, the system is provided with a single activation/deactivation port 6. The port 6 is connected with the bladder 14 so that air can be supplied to the bladder 14 or can be removed therefrom through the port 6. The port 6 may be provided with a valve, for instance with a bladder valve. Air may be supplied to the port by a gas compressor. In order to activate the anti-skid device, air is supplied to the bladder 14 through the port 6 and the corresponding valve is closed so as to keep the device in the activated state. For deactivating the device, the valve is opened and air is let out from the bladder through the port 6 so as to deflate the bladder. When the pressure of the gas inside the bladder is low enough for the springs 13 to retract the movable blocks 2, the device is brought in the deactivated state.

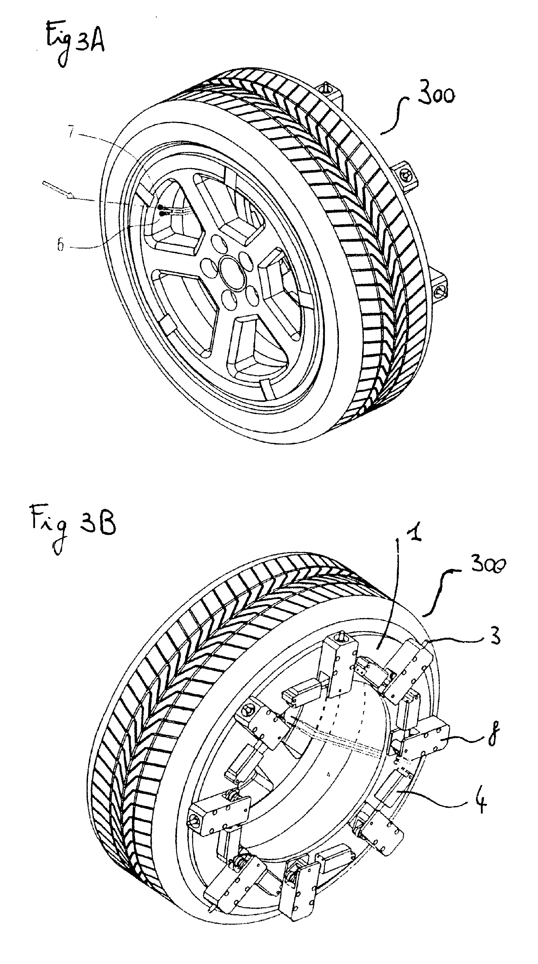

Figures 3A to 3F schematically show an anti-skid device according to a third embodiment of the present invention. For simplicity, identical or corresponding components are indicated in the figures with the same reference numbers.

As can be seen in figures 3A and 3B, the device 300 is provided on the inner side of the wheel, i.e. on the side of the wheel facing the vehicle. In alternative embodiments of the present invention, the device 300 could be provided on the outer side of the wheel. In still alternative embodiments of the present invention, the device 300 could be provided between two paired twin wheels, for instance in the case of vehicles such as trucks. The anti-skid device has a substantially circular shape and it comprises a circular support 1 provided with a plurality of fixed blocks 8 disposed along the perimeter of the support 1. The support 1 as well as the blocks 8 may be made of any suitable material. For instance, the support 1 and the blocks 8 may be made of light alloys. The support 1 is adapted to be fixed to the wheel of the vehicle. The support 1 may be adapted to be fixed, for instance, to the rim of the wheel. Alternatively, the support 1 may be adapted to be fixed to the hub of the wheel. The support 1 may be for instance a flange having, therefore, a flattened-ring form. The blocks 8 are arranged on the support 1 and attached thereon in such a way so as not to be movable with respect to the support 1. For instance, the blocks 8 may be fastened to the support 1 by means of fastening means such as screws. Each of the fixed blocks 8 is provided with protruding movable pins 3 and with pneumatic actuating means for controlling the movement of said protruding pins 3 as explained in detail below.

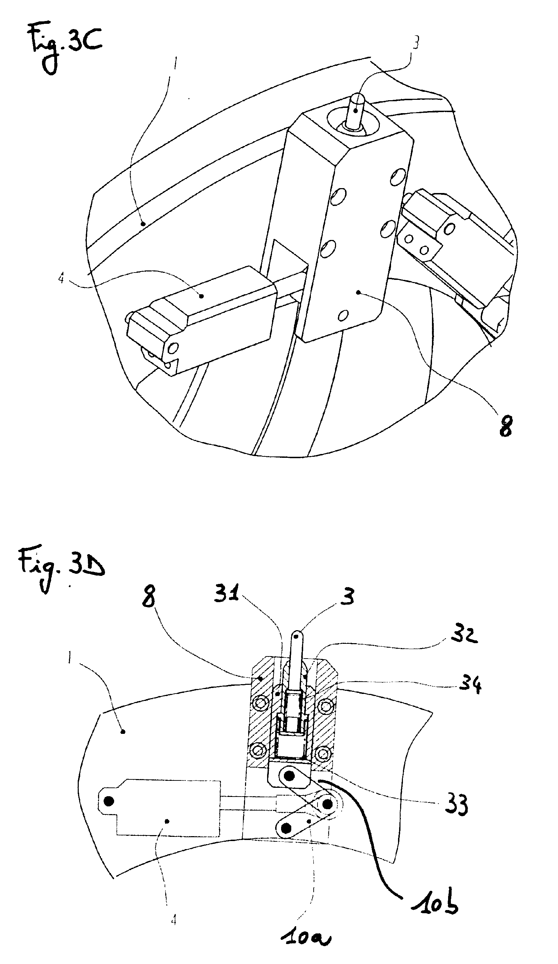

Figures 3C and 3D display enlargements of the blocks 8 and of the pneumatic actuating means adapted to control the movement of the pins 3.

The fixed block 8 shown in figure 3D has substantially a parallelepiped form and it is provided with a cavity housing the movable pin 3. Although in the embodiment shown in the figure the block 8 is provided with a single cylindrical pin 3, the number and the shape of the pins may vary. The pins could be for instance pointed or with a rounded tip. Moreover, the pins could have the shape of a parallelepiped, a cone, a pyramid or a frustum instead of a cylinder.

The cavity and the moving mechanism of the pin 3 are schematically shown in detail in figure 3C. The cavity is provided with a first housing element 31 adapted to be engaged with the pneumatic actuating means. The first housing element 31 houses a first spring 33 and a second housing element 32. In particular, the second housing element 32 is mounted on the first spring 33 so that the second housing element 32 is movable within the first housing element 31 under the action of the elastic force of the first spring 33. The second housing element 32 houses a second spring 34 and the pin 3. In particular, the pin 3 is mounted on the second spring 34 so that the pin 3 is movable within the second housing element 32 under the action of the elastic force of the second spring 34. The springs 33 and 34 can be replaced by any other suitable elastic means.

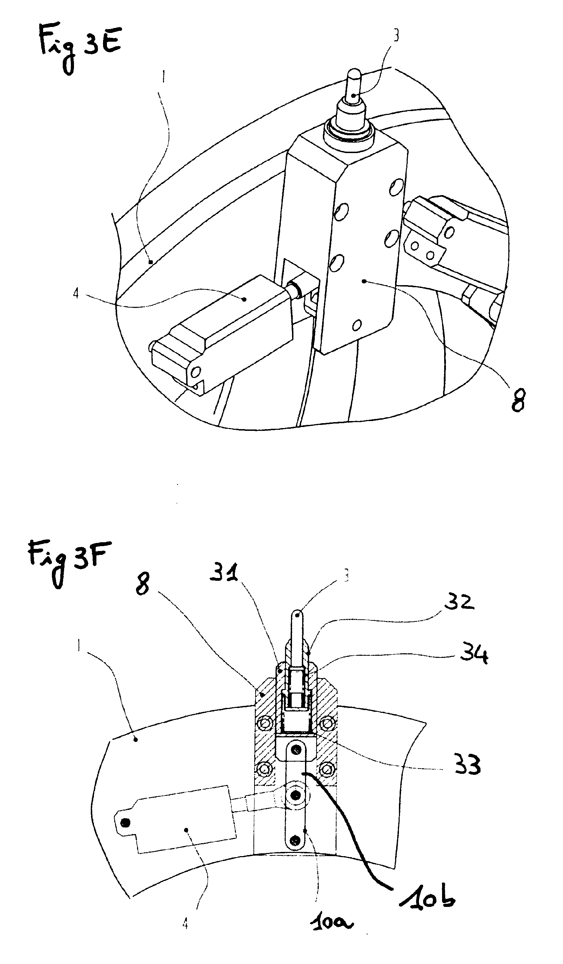

The pneumatic actuating means comprise a pneumatic actuator 4 with an actuating arm and two pivotable actuating levers 10a and 10b. The actuating arm is coupled with the pivotable actuating levers 10a and 10b at the junction between the two actuating levers. The coupling may be performed by bolts. The first end of the first actuating lever 10a is fixed to the support 1. In particular, the first actuating lever 10a is pivotally engaged around the first end, i.e. the first actuating lever 10a can rotate around the first end, but said first end is fixed. The second end of the first actuating lever 10a is pivotally engaged with the first end of the second actuating lever 10b and with the actuating arm. The second end of the second actuating lever 10b is pivotally engaged with the first housing element 31. When the actuating arm is extracted (i.e. pushed in the right direction in figure 3C), the pivotable actuating levers 10a and 10b are bent so as to form a V-shaped structure. The distance between the first end of the first actuating lever 10a and the second end of the second actuating lever 10b is at its minimum value and the first housing element 31 is retracted. In this configuration, the device is deactivated (figure 3C). On the contrary, when the actuating arm is retracted, the first and the second actuating levers 10a and 10b are aligned so that the distance between the first end of the first actuating lever 10a and the second end of the second actuating lever 10b is at its maximum value. In this case, the first housing element 31 is pushed outward and the device is activated (figures 3E and 3F).

The anti-skid properties and the driving comfort properties of the device according to the third embodiment of the present invention are similar to the properties of the first and of the second embodiment. In particular, once the system is activated, the protruding pins 3 are substantially level with the tire tread or, in other words, the protruding pins 3 are substantially at the same level of the tire tread, so as to exert the anti-skid function. The springs 33 and 32 contributes pushing the pins 3 toward the road surface so as to perform the anti-skid functionality. At the same time, since the springs 33 and 32 can be pressed, they guarantee the shock absorber functionality of the system, in particular in the case of irregular road surfaces with asperities.

The pneumatic circuit of the anti-skid device according to the third embodiment is identical to the pneumatic circuit of the anti-skid device according to the first embodiment described above with reference to figures 1G - 1N. In particular, the circuit comprises the activation port 6 and the deactivation port 7 visible for instance in figure 3B. When high pressure air is provided to the activation port 6, the actuating arm of each of the pneumatic actuators 4 is retracted and the device is activated. When high pressure air is provided to the deactivation port 7, the actuating arm of each of the pneumatic actuators 4 is extracted and the device is deactivated. The activation/deactivation procedures are identical to those described with reference to figures 1K - 1N with respect to the first embodiment of the present invention.

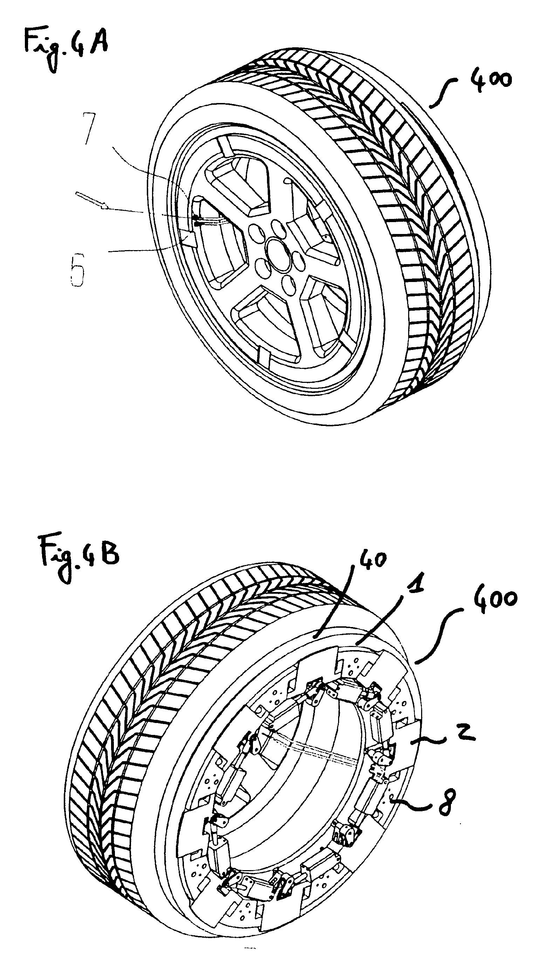

Figures 4A to 4H schematically show an anti-skid device according to a fourth embodiment of the present invention. For simplicity, identical or corresponding components are indicated in the figures with the same reference numbers.

As can be seen in figures 4A and 4B, the device 400 is provided on the inner side of the wheel, i.e. on the side of the wheel facing the vehicle. In alternative embodiments of the present invention, the device 400 could be provided on the outer side of the wheel. In still alternative embodiments of the present invention, the device 400 could be provided between two paired twin wheels, for instance in the case of vehicles such as trucks. The anti-skid device has a substantially circular shape and it comprises a circular support 1 provided with a series of circular segments or blocks 2 and 8. In particular, movable blocks 2 are alternate along the perimeter of the support 1 with fixed blocks 8. The support 1 as well as the blocks 2 and 8 may be made of any suitable material. For instance, the support 1 and the blocks 2 and 8 may be made of light alloys. The support 1 is adapted to be fixed to the wheel of the vehicle. The support 1 may be adapted to be fixed, for instance, to the rim of the wheel. Alternatively, the support 1 may be adapted to be fixed to the hub of the wheel. The fixed blocks 8 are arranged on the support 1 and attached thereon in such a way so as not to be movable with respect to the support 1. The movable blocks 2 are adapted to be movable, with respect to the support 1, along a diametral direction of said support 1. The movement of the blocks 2 is pneumatically actuated as described in detail below. Each of the movable blocks 2 is provided with pneumatic actuating means. The device 400 is further provided with a surrounding spring 40 disposed around the entire external perimeter of the device in contact with the upper surfaces of the movable blocks 2.

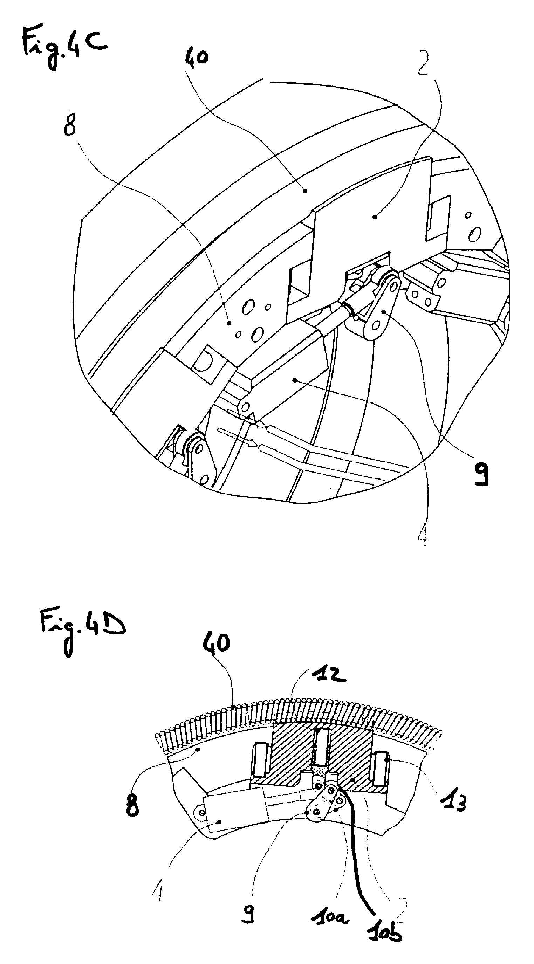

Figures 4C and 4D display enlargements of the blocks 2 and 8 and of the pneumatic actuating means adapted to control the movement of the movable blocks 2.

The structure of the blocks and of the corresponding pneumatic actuating system is similar to the structure of the blocks and of the corresponding pneumatic actuating system of the first embodiment of the present invention described with reference to figures 1C and 1D.

In particular, figure 4C displays a fixed block 8 attached to the support 1. The block 8 is substantially T-shaped and it is placed between two movable blocks. The movable block 2, in turn, is placed between two fixed blocks. In particular, adjacent fixed blocks form a guide wherein the movable blocks are placed and along which they can move. The movable block 2 is also substantially T-shaped but it is arranged upside down with respect to the fixed block 8. In figures 4C and 4D the anti-skid device is deactivated. In particular, the movable blocks are in their rest position, i.e. retracted. As can be seen from figure 4D, the system is provided with springs 13 placed in the spaces between adjacent blocks 2 and 8. In particular, the springs 13 are placed between the lower region of the movable T-shaped block 2 and the upper region of the fixed T-shaped block 8. The elastic force exerted by the spring 13 pushes the movable block 2 toward its rest position. In particular, the elastic force exerted by the spring 13 contributes to retracting the movable block 2. The movable block is further provided with a cavity equipped with a spring 12. The elastic force exerted by the spring 12 is opposed to the force exerted by the spring 13. In particular, the spring 12 pushes the movable block 2 toward the activated position. The presence of the springs 12 and 13 is particularly relevant for guaranteeing the mobility of the blocks when they are pushed against the road surface when the anti-skid device is activated. In particular, the springs 12 and 13 act as shock absorbers improving the driving comfort of the vehicle when the anti-skid system is activated. The springs 12 and 13 can be replaced by any other suitable elastic means.

Figures 4C and 4D further display the pneumatic actuating means adapted to control the movement of the movable blocks 2. Said pneumatic actuating means comprise a pneumatic actuator 4 with an actuating arm and two pivotable actuating levers 10a and 10b. The pivotable actuating levers 10a and 10b are jointed to each other by bolts. In particular, the first actuating lever 10a is pivotally connected at its first end with the support 1. The second end of the first actuating lever 10a is pivotally connected with the first end of the second actuating lever 10b. The second end of the second actuating lever is pivotally connected with the movable block 2. The actuating arm of the pneumatic actuator 4 and the pivotable actuating levers 10a and 10b are coupled to each other via a pivotable control lever 9 fastened to said actuating arm by bolts. In figures 4C and 4D the anti-skid device is deactivated. In particular, the actuating arm of the pneumatic actuator 4 is extended so that the pivotable control lever 9 is bent rightward in figure. When the pivotable control lever 9 is in this position, it forces the pivotable actuating levers 10a and 10b to be bent so as to form a V-shaped configuration. In this configuration, the first end of the first actuating lever 10a is at the minimum distance to the second end of the second actuating lever 10b and the movable block 2 is retracted. In this configuration the anti-skid device is deactivated.

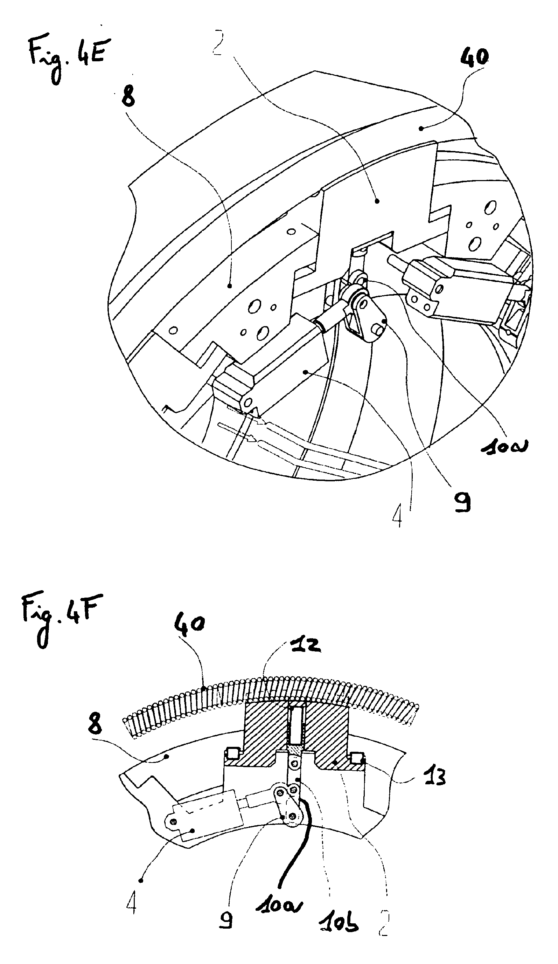

Figures 4E and 4F show in detail the situation with the activated anti-skid device. The actuating arm of the pneumatic actuator 4 is retracted so that the pivotable control lever 9 is bent leftward in figure. When the pivotable control lever 9 is in this position, the actuating levers 10a and 10b are aligned and the movable block 2 is extracted. In this configuration the springs 13 placed in the spaces between adjacent blocks 2 and 8 are pressed. The movable block 2 pushes the surrounding spring 40 outward so as to exert the anti-skid functionality.

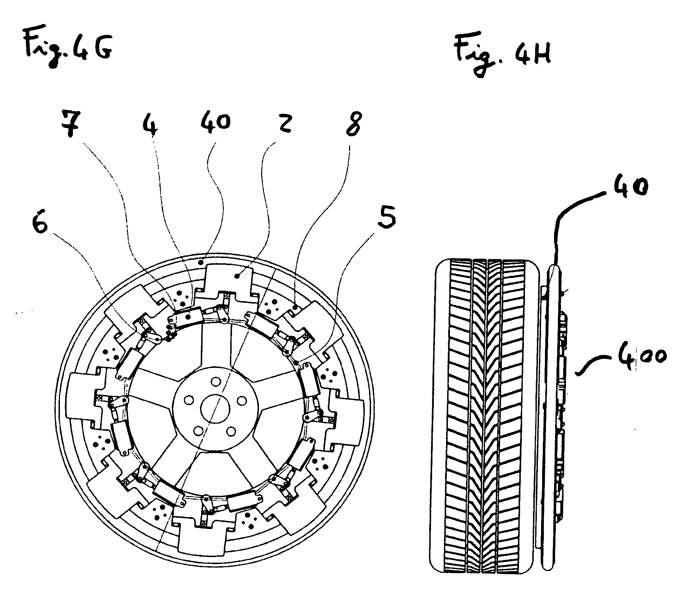

In particular, as can be seen in figures 4G and 4H displaying the device 400 in the activated state applied to a wheel, the upper surface region of the surrounding spring 40 is substantially level with the tire tread or, in other words, the upper surface region of the surrounding spring 40 is substantially at the same level of the tire tread. Accordingly, when the wheel rotates, the upper surface region of the surrounding spring 40 comes into contact with the road surface so as to exert the anti-skid function. Moreover, the springs 13 and 12 allow the movable blocks 2 to be pushed inward, especially in the case of irregular road surfaces with asperities. If the wheel encounters an asperity, in particular in correspondence of a movable block 2 of the anti-skid device, the movable block can be easily pushed inward by pressing against the spring 12. This has the double advantageous effect of improving the driving comfort of the vehicle on irregular road surfaces and of preventing the anti-skid device and, in particular, the movable blocks and the corresponding pneumatic actuating means from being damaged by the presence of asperities on the road surface.

The pneumatic circuit of the anti-skid device according to the fourth embodiment is identical to the pneumatic circuit of the anti-skid device according to the first embodiment described above with reference to figures 1G - 1N. In particular, the circuit comprises the activation port 6 and the deactivation port 7 visible for instance in figure 4B. When high pressure air is provided to the activation port 6, the actuating arm of each of the pneumatic actuators 4 is retracted and the device is activated. When high pressure air is provided to the deactivation port 7, the actuating arm of each of the pneumatic actuators 4 is extracted and the device is deactivated. The activation/deactivation procedures are identical to those described with reference to figures 1K - 1N with respect to the first embodiment of the present invention.

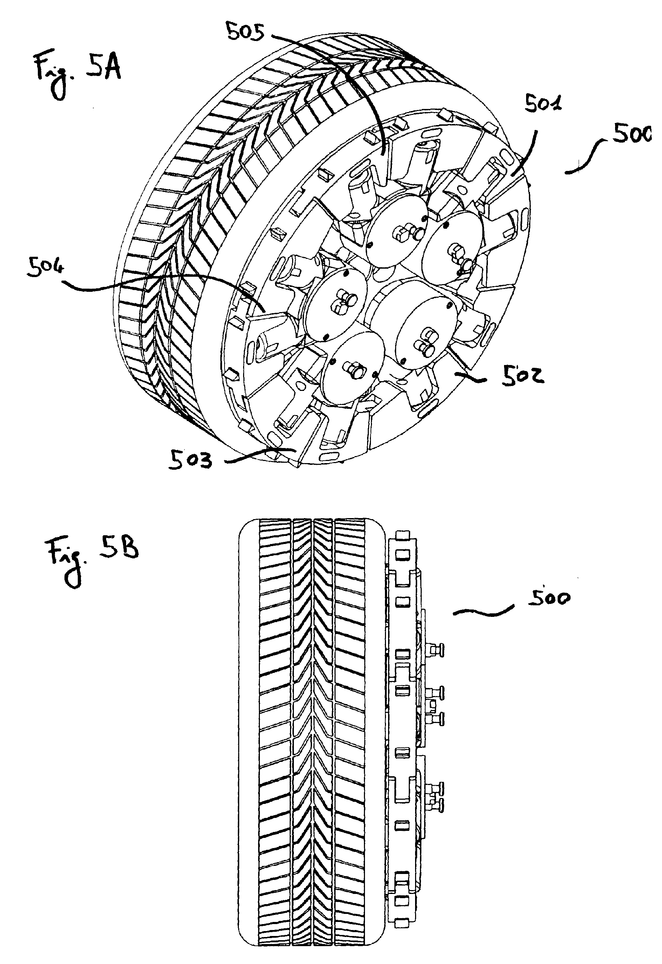

Figures 5A to 5N schematically show an anti-skid device according to a fifth embodiment of the present invention. For simplicity, identical or corresponding components are indicated in the figures with the same reference numbers.

As can be seen in figures 5A and 5B, the device 500 is provided on the outer side of the wheel. The anti-skid device 500 comprises a plurality of removable anti-skid units. In particular, as can be seen in figure 5A, the anti-skid device 500 comprises five identical anti-skid units 501, 502, 503, 504 and 505. The units are adapted to be mounted on the wheel. The units may be adapted, for instance, to be fixed to the rim of the wheel. Alternatively, the units may be adapted to be fixed to the hub of the wheel. In alternative embodiments of the present invention, the units may be adapted to be mounted on a support adapted to be fixed to the wheel. The units may be made of any suitable material. For instance, the units my be made of light alloys. As can be seen in figure 5A, the units are structured in such a way that when mounted on the wheel they cover the entire perimeter of the wheel itself. In particular, each of the units has a shape substantially corresponding to a circular segment. Since, in the embodiment shown in the figure, five identical units form the anti-skid device 500, the angle corresponding to the circular segment for each of the units measures approximately 70°.

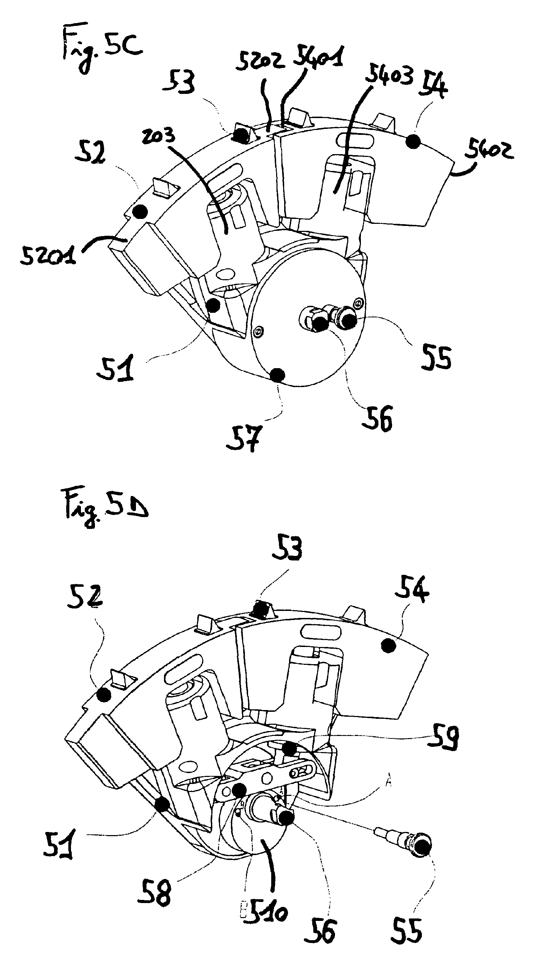

Figures 5C to 5F schematically show the structure and the functioning mechanism of one of the anti-skid units.

The anti-skid unit comprises a main body 51, for instance a light alloy main body, adapted to house left and right claws supports 52 and 54 and actuating means 57 adapted to control the movement of said left and right claws supports.

The left claws support 52 is adapted to be engaged with the right claws support 54. In particular, the left claws support 52 is provided with a protrusion 5201 located on the left side of the left claws support 52 and with a protrusion 5202 located at the right side of the left claws support 52. The right claws support 54 is provided with a left cavity 5401 located on the left side and a right cavity 5402 located on the right side. The right protrusion 5202 of the left claws support 52 is adapted to be inserted into the left cavity 5401 of the right support 54. The left protrusion 5201 is adapted to be engaged with the right cavity of the right claws support of a further unit that is to be mounted on the left adjacent to the unit depicted in the figures. Similarly, the right cavity 5402 is adapted to house the left protrusion of the left claws support of a further unit that is to be mounted on the right adjacent to the unit depicted in the figures.

The upper surface of the left claws support 52 is curved so as to define a circular segment. Similarly, the upper surface of the right claws support 54 is also curved so as to define a circular segment. The curvatures of the upper surfaces are shaped so that when the left claws support 52 is engaged with the right claws support 54, the upper surface define a circular segment corresponding to a fraction of the circle formed when the plurality of identical units are mounted adjacent to each other on the wheel.

The left and right claws supports are provided with claws 53 adapted to exert friction on the road surface. In the embodiment shown in the figure, each of the left and right claws support is provided with two pointed claws 53. The number and the shape of the claws may vary. The claws are housed in cavities realized in the claws supports 52 and 54. Moreover, the cavities housing the claws are provided with springs and the claws 53 are mounted on said springs. The elastic force exerted by the springs pushes the claws 53 so as to protrude outside from the claws supports. The presence of the springs is particularly relevant for guaranteeing the mobility of the claws when they are pushed against the road surface when the antiskid device is activated. On one hand, the springs, pushing the claws so as to protrude, guarantee the road holding and the anti-skid performances of the device according to the present invention. On the other hand, the springs act as shock absorbers allowing the claws to be pressed inside the claws supports when they are pushed against the road surface. Instead of springs, the claws could be mounted on any other kind of suitable elastic means.

The left and right claws supports 52 and 54 are adapted to be displaceable. In particular, the left and right claws supports 52 and 54 are provided on springs 5203 and 5403, respectively, that allow the claws supports to be pushed inward when they get in contact with the road surface, especially in the case of irregular road surfaces with asperities. In this way, a shock absorber function is achieved and the anti-skid device according to the first embodiment of the present invention guarantees the driving comfort of the vehicle. If the wheel encounters an asperity, the claws supports can be easily pushed inward by pressing the elastic means. This has the double advantageous effect of improving the driving comfort of the vehicle on irregular road surfaces and of preventing the anti-skid device and, in particular, the claws supports 52 and 54 and the corresponding actuating means 57 from being damaged by the presence of asperities on the road surface. The springs 5203 and 5403 could be replaced by any other kind of suitable elastic means.

The left and right claws supports 52 and 54 are actuated by means of mechanical actuating means 57. The actuating means are schematically shown in figure 5D.

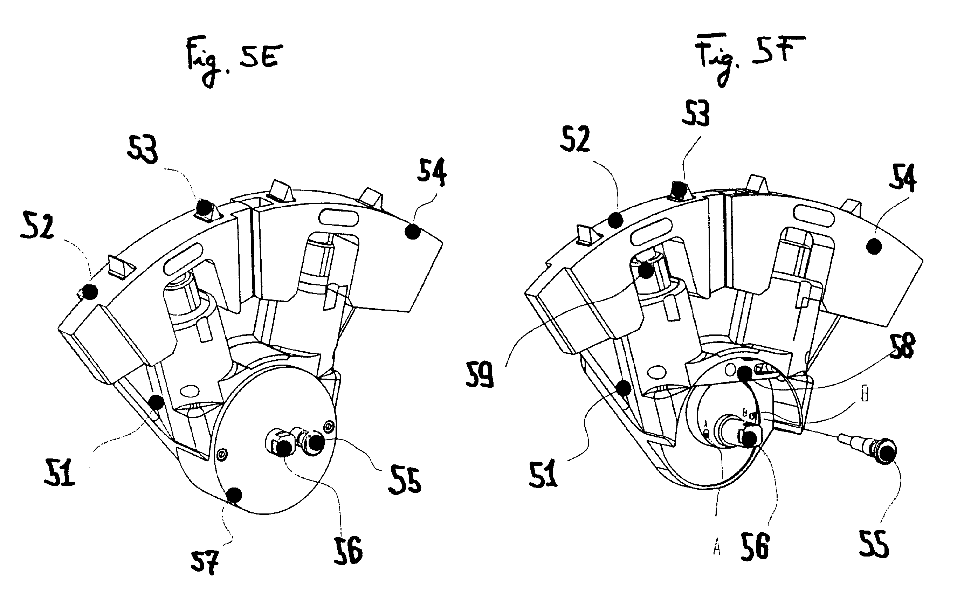

The actuating means comprise a bar 58 adapted to be engaged with the left and right claws supports 52 and 54. The bar is supported by an eccentric 510. The eccentric 510 is formed by a disc fixed off-center to a shaft 56. The shaft 56 defines the axis of rotation around which the disc rotates. In alternative embodiments of the present invention, the eccentric may comprise a cam. Since the bar 58 engaged with the left and right claws supports is supported by the eccentric 510, the rotation of the eccentric allows the bar 58 to be lifted and lowered. The claws supports 52 and 54 are accordingly extracted or retracted. Figures 5C and 5D display the claws supports 52 and 54 retracted. In this configuration, the anti-skid unit is deactivated. Figure 5E and 5F display the claws supports 52 and 54 extracted. In this configuration the anti-skid unit is activated. The rotation of the eccentric is actuated by acting on the shaft 56. For instance, the shaft 56 could be shaped in such a way to be actuated by a tool such as a wrench.

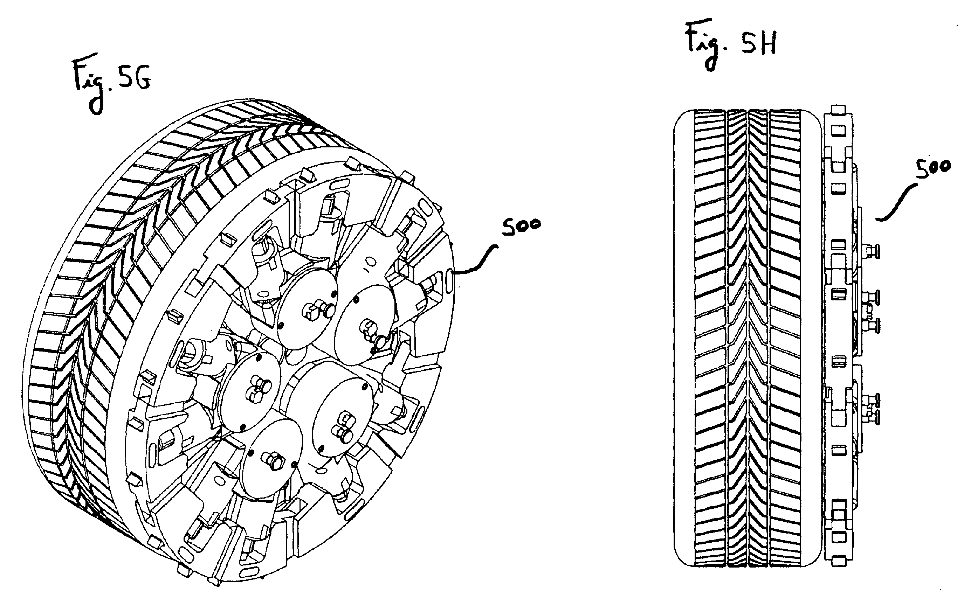

Figures 5G and 5H display the wheel provided with five anti-skid units activated. The claws are substantially level with the tire tread or, in other words, the claws are substantially at the same level of the tire tread.

The described embodiments of the present invention are extremely easy to activate/deactivate. In particular, the device according to present invention may be mounted on the wheel and kept thereon during certain times of the year, for instance in winter time, and be easily activated or deactivated according to the circumstances. Even in case of sudden snowfalls or frost, it is simply necessary to activate the actuating means to obtain a complete and safe traction control of the vehicle on the slippery road. Similarly, whenever the vehicle travels on clean road surfaces, it is simply necessary to deactivate the device. It is not necessary to remove it from the wheel.

Moreover, the shock-absorbing means guarantees high driving and travelling comfort of the vehicle.

Furthermore, the anti-skid device according to the present invention, does not contribute at all to the tire wear process. Accordingly, even if the anti-skid device according to the present invention is employed for long time, the surface of the tire is not damaged or ruined.

The anti-skid device according to the present invention is suitable to be installed on several kinds of wheels and, accordingly, on several kinds of vehicles. It can be installed, for instance, on wheels for cars or for trucks.

## Claims

1. Anti-skid device for a wheeled vehicle, said anti-skid device comprising:
anti-skid means comprising gripping means (3) adapted to exert friction on a slippery road surface, wherein said anti-skid means are displaceable from an activated position wherein the gripping means (3) are substantially level with the tire tread of the wheel so as to exert friction on the road surface to a deactivated position wherein the gripping means (3) are below the level of the tire tread of the wheel and vice versa; and
actuating means for displacing said anti-skid means from said deactivated position to said activated position and vice versa.

2. Anti-skid device according to claim 1, wherein said anti-skid means are further provided with shock absorbing means (12; 13) for allowing said anti-skid means to be elastically displaced.

3. Anti-skid device according to one of claims 1 or 2, wherein said gripping means are further provided with shock absorbing means (11) for allowing said gripping means to be elastically displaced.

4. Anti-skid device according to one of claims 1 to 3, wherein said gripping means comprise a surrounding spring (40) disposed around the entire external perimeter of the anti-skid device so that when said anti-skid means are in said activated position the perimeter of said surrounding spring (40) substantially corresponds to the perimeter of the wheel.

5. Anti-skid device according to one of claims 1 to 4, wherein said actuating means comprise pneumatically actuated actuating means.

6. Anti-skid device according to claim 5, further comprising a support (1) adapted to be engaged with the rim of the wheel and/or with the hub of the wheel.

7. Anti-skid device according to one of claims 5 or 6, wherein said pneumatically actuated actuating means comprise a bladder (14).

8. Anti-skid device according to claim 6, wherein said pneumatically actuated actuating means comprise an actuator (4) engaged through an actuating arm with a pair of pivotable actuating levers (10a; 10b) wherein the first lever (10a) is pivotally connected with said support (1) via a first end of said first lever (10a), the second lever (10b) is pivotally connected with the first lever (10a) via a first end of said second lever (10b) and via a second end of said first lever (10a), the second lever (10b) is pivotally connected with said anti-skid means via a second end of said second lever (10b), and said actuating arm is pivotally connected with said second end of said first lever (10a) and with said first end of said second lever (10b) so that the actuation of said actuator (4) allows said second end of said second lever (10b) to be displaced from a minimum distance to said first end of said first lever (10a) to a maximum distance to said first end of said first lever (10a) and vice versa.

9. Anti-skid device according to claim 8, wherein said anti-skid means comprise:
a first housing element (31) adapted to be engaged with said pneumatic actuating means and adapted to house a second housing element (32); and
a second housing element (32) housed in said first housing element (31) and adapted to be elastically displaced within said first housing element (31), said second housing element (32) being further adapted to house said gripping means (3).

10. Anti-skid device according to one of claims 5 to 9, further comprising a pneumatic circuit (5) comprising at least an activation port (6) for providing air to the circuit (5) for activating the device.

11. Anti-skid device according to one of claims 1 to 4, wherein said actuating means are mechanically actuated actuating means.

12. Anti-skid device according to claim 11, wherein said device comprises a plurality of removable anti-skid units (501, 502, 503, 504, 505), each of said anti-skid units being adapted to be engaged with the wheel of the vehicle.

13. Anti-skid device according to claim 12, wherein each of said anti-skid unit is further adapted to be engaged with at least one of the other anti-skid unit.

14. Anti-skid device according to one of claims 11 to 13, wherein said mechanically actuated actuating means comprise an eccentric (510) so that the rotation of said eccentric (510) allows said anti-skid means to be displaced from said deactivated position to said activated position and vice versa.

15. Anti-skid device according to claim 14, wherein said eccentric (510) is adapted to be rotated by a working tool such as a wrench.
